# EUROPEAN PATENT SPECIFICATION

(11) **EP 1 414 213 B1**
(45) Date of publication and mention of the grant of the patent: **30.11.2011**
(21) Application number: 02292637.2
(22) Date of filing: 24.10.2002
(51) Int. Cl.: H04L 29/06

(54) **Packet classifier and processor in a telecommunication router**
Paketklassifizierer und Prozessor für Telekomminikationsrouter
Classificateur de paquets et processor pour routeur de télécommunication

(43) Date of publication of application: 28.04.2004
(73) Proprietor: Alcatel Lucent, 75008 Paris (FR)
(72) Inventor: Henderickx, Wim, 2260 Westerlo (BE); Van Hessche, Peter Alfons, 9820 Merelbeke (BE); Hereygers, Guido Jozef Nelly, 2910 Essen (BE)
(74) Representative: Narmon, Gisèle Marie Thérèse

(56) References cited:
- WO-A-01/03400
- US-B1- 6 353 616
- US-B1- 6 463 068

## Description

The present invention relates to a telecommunication router connected to a termination link and comprising a processor adapted to handle packets of data received from said link, said telecommunication router further comprising a plurality of queues adapted to store packets of data prior to be transferred to said processor, and a packet classifier adapted to receive packets of data from said termination link, to classify the received packets according to predetermined types, and to forward classified packets towards one queue out of said plurality, said one queue being selected according to the type of the forwarded packet.

Such a telecommunication router is already known in the art and is generally an IP [Internet Protocol] router. A possible problem with the known router is that, in some circumstances, the processor is not able the follow the incoming flow of packets from the termination link. This occurs for instance when the data traffic come into the router at the line rate. The processor may then run out of resources because there is not enough memory and/or processing power available to handle all the incoming packets.

A first solution to solve the problem of line rate data traffic is to install a "policer" to limit the traffic to the processors. Such a policer is for instance of the type GSR12416 of CISCO™ or of the type M160 of JUNIPER™, which are already known and used in the art, e.g. as mentioned at page 12 of a article published on the Internet web site:
*http:*//*www.mrv.com*/*downloads*/*PDF*/*CWNT*/ 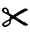
*CharlottesWebMarketing.pdf*
(wherein the symbol " 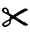 " merely indicates that the statement continues on the next line without space or return character between).

However, it is very difficult to configure the policer for using the resources of the processor in optimal way. For instance, if the policer is configured to handle only 10 pps [Packets Per Second] for an ICMP [Internet Control Message Protocol] "destination unreachable", whilst the processor can handle up to 50000 pps, the processor is obviously not used well enough.

Furthermore, the policer cannot be configured properly to prevent all possible attacks. In the area of security, for instance, a lot of issues for DoS [Denial of Service] attacks cannot be resolved therewith.

An object of the present invention is to provide a telecommunication router of the above known type but wherein the processor is used in an efficient and optimal way.

According to the invention, this object is achieved due to the fact that each of said predetermined types is associated to a predetermined priority, that said plurality of queues is a plurality of priority queues, that said packet classifier is adapted to estimate said predetermined priority by analyzing the content of a packet and to forward the analyzed packet to the priority queue corresponding to the estimated priority, and that said processor is adapted to retrieve packets of data from the priority queues of said plurality according to predetermined priority rules whereby said processor is adapted to retrieve packets of data from a priority queue associated to a relative high predetermined priority prior to retrieve packets of data from another priority queue associated to a relatively lower predetermined priority.

In this way, the packets of data are treated based on the current load of the processor. By buffering packets in the priority queues, the processing power is used as much as possible and a maximum of packets is processed as a function of the available processing power. The processor is thus used in an optimal way with respect to the efficiency of the telecommunication router. The router will allow low priority traffic to be handled depending on how much load the processor has and also depending on how many higher priority tasks are scheduled.

Furthermore, packets of data can be retrieved and handled by the processor in function of their priority rather than in function of the order of incoming from the termination link into the telecommunication router.

It is to be noted that the U.S. Patent 6 353 616- B1 by Elwalid A. et al (5 March 2002) discloses a packet network employing a reservation-based protocol system includes routers having processing sections that schedule message processing of the protocol's control messages adaptively based on link utilization. A scheduler of the processing section employs a round-robin scheduling with adaptive weight assignment to allocate processing capacity for control messages. For the RSVP protocol, for example, messages are grouped in classes, and link utilization of the packet flows for each message class is monitored. Weights corresponding to a portion of the processing section's processing capacity are allocated to each message class. The weights are defined based on link utilization for the message class and average message queue length. For processing sections monitoring multiple links, weights are further defined for super-classes based on overall link utilization. Weights may change as link utilization and average message size changes. With defined weights adaptively defined, the processing section then processes each message class in a cyclic, "round-robin" fashion.

However, this known U.S. Patent doesn't disclose that the queues are priority queues, that the predetermined types of the received packets are associated to a predetermined priority and that the processor is adapted to retrieve packets of data from the queues according to predetermined priority rules as mentioned above.

It is also to be noted that the PCT Application WO 01/03400-A2 by Ekberg Jan-Erik and Raisanen Vilho I (NOKIA Internet Communications Inc (US) 11 January 2001) discloses an advanced traffic shaper provided for shaping real-time traffic in an IP-based network while simultaneously providing keep-alive bandwidth for best-effort traffic. The traffic shaper comprises a packet classifier coupled to receive an incoming packet from the network and to classify the incoming packet as one of a real-time packet and a best-effort packet; a packet discarding block coupled to perform traffic shaping of the incoming packet from the packet classifier and discard the incoming packet in accordance with traffic shaping parameters; connection queues coupled to temporary store real-time packets and best-effort packets from the packet discarding block, respectively; and a packet scheduling block coupled to send the real-time and best-effort packets from the connection queues to an outgoing device in accordance with the traffic shaping parameters.

This known PCT Application discloses two queues for "a real time packet and a best-effort packet" but again, nothing is said about "priority" and about any "processor adapted to retrieve packets of data from the priority queues according to predetermined priority rules" as mentioned above.

It is finally to be noted that the U.S. Utility Patent 6 463 068-B1 of Edsall Thomas J et al (8 October 2002) discloses a router including a classifier that classifies packets assigned to 2^{n-m} classes of service into 2ⁿ classes of service that are supported by the router. The classifier then sets the loss priorities of the respective packets to one of m levels. The router uses a modified weighted random early detection scheme that is based on probabilities of discard associated with the 2^{n+m} classes of service to determine whether to retain or discard particular packets. The router uses a single buffer to store packets directed to all of the various output ports. The available storage locations in the buffer are linked to a free queue and a weighted average depth of the free queue is used to determine whether or not to retain a given packet. The router compares the weighted average depth of the free queue to maximum and minimum thresholds associated with the particular 2^{n+m} class of service to which the packet is assigned. If the weighted average is above the maximum threshold, the packet is retained. If the weighted average is below the minimum threshold, the packet is discarded. If the weighted average is between the two thresholds, a probability of discard that is based on the 2^{n-m} classes of service is calculated and compared to a random value to determine whether or not the packet should be retained. If the probability of discard exceeds the random value, the packet is discarded. The other packets exit various output ports of the router based on weighting factors associated with the 2ⁿ classes of service.

Although this U.S. Utility Patent discloses a router that "controls packet retention/discard", it subject matter is not relevant against the present application and can only be used as background information.

Also another characterizing embodiment of the present invention is that each priority queue of said plurality of priority queues is controlled by a queue manager adapted to discard packets coming from said packet classifier when a predetermined threshold filling level of the priority queue is reached.

A generic overload protection is thereby provided.

Preferably, each priority queue of said plurality of priority queues has a different predetermined threshold filling level.

The overload protection is thus dependent of the data traffic type, i.e. according to the priority, rather than of the normal incoming traffic flow.

In variants of the present invention, a plurality of termination links are connected to said packet classifier and/or a plurality of processors are adapted to retrieve packets of data from said priority queues.

Further characterizing embodiments of the present telecommunication router are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

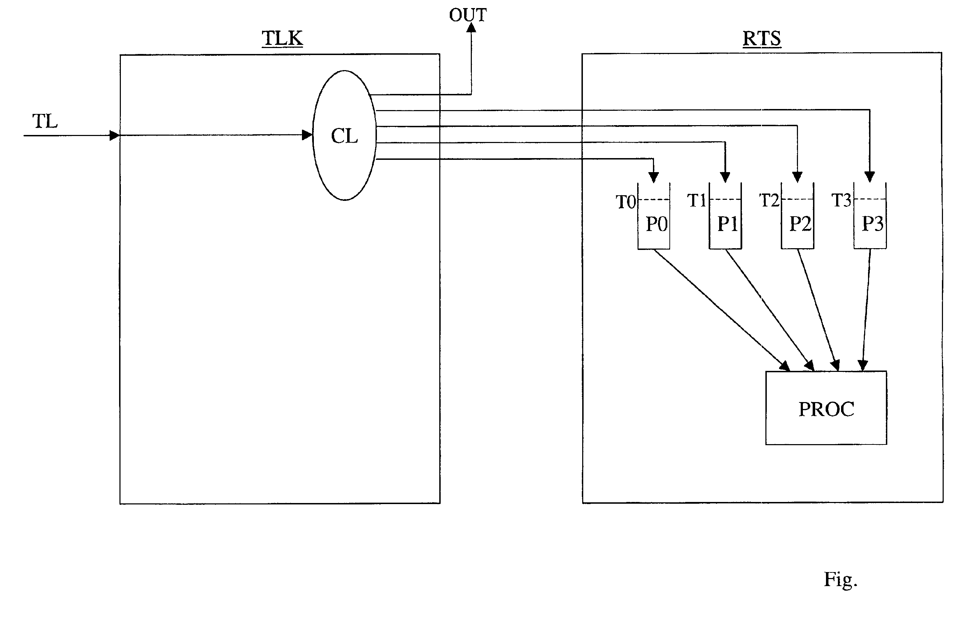

The above and other objects and features of the invention will become more apparent and the invention itself will be best understood by referring to the following description of an embodiment taken in conjunction with the accompanying drawings wherein the figure (Fig.) represents a telecommunication system according to the invention.

The telecommunication router shown in the figure comprises a trunk line card TLK that preferably is an IP [Internet Protocol] termination card, and a Remote Transfer Service card RTS.

Several termination links, of which only one TL is shown, are coupled to the line card TLK. The termination link TL carries packets of data and may for instance transmit these packets according to the transmission protocols "OC48" or "OC192", whereby the packets arrive in the line card TLK at a rate of 2.6 Gbps or 10 Gbps, corresponding to 6.1 Mpps or 25 Mpps respectively.

The line card TLK comprises a packet classifier CL to which the termination link TL is coupled. The classifier CL receives the packets from the line TL and classifies them according to their type. Particular types of packets of data are for instance indicated by the messages:
- "TTL=00/1": "Time-To-Live" [TTL] is a value in an Internet Protocol [IP] packet that tells the telecommunication router whether or not the packet has been in the network too long and should be discarded;
- "Options": corresponds for instance to packets whereof the contents indicates "Loose Source Routing" [LSR];
- "No Dest": corresponds to an "Internet Control Message Protocol" [ICMP] which is a message control and error-reporting protocol between a host and a gateway to the Internet;
- signaling such as "Resource Reservation Protocol" [RSVP] that is a set of communication rules that allows channels or paths on the Internet to be reserved for the multicast (one source to many receivers) transmission of video and other high-bandwidth messages. RSVP is part of the Internet Integrated Service [IIS] model, which ensures best-effort service, real-time service, and controlled link-sharing;
- Routing Protocols such as "Border Gateway Protocol" [BGP] that is a protocol for exchanging routing information between gateway host in a network of autonomous systems, or "Open Shorted Path First" [OSPF] that is a router protocol used within larger autonomous systems networks in preference to the "Routing Information Protocol" [RIP];

- Internal Communication messages;
- etc ...

All these types are associated to a transmission priority through the telecommunication router. By way of example:
- the highest priority, say P3, will be given to the Internal Communication messages;
- a relatively lower priority, say P2, will be given to BGP and OSPF;
- still a relatively lower priority, say P1, will be given to RSVP; and
- the lowest priority, say P0, will be given to TTL, LSR and ICMP.

The packet classifier CL of the line card TLK has several outputs which are connected to inputs of distinct queues located on the remote transfer service card RTS. The card RTS is provided with four queues P0, P1, P2 and P3 of which respective outputs are connected to a common processor PROC also located on the card RTS. The packet classifier CL is connected to the queues P0-P3 in such a way that each queue receives packets of its like-named priority P0-P3. As a result, the packets with the highest priority are stored in the queue P3, whilst those with the lowest priority are stored in the queue P0. This classification to the different queues can obviously be configured.

In a preferred embodiment, the packet classifier CL estimates the priority P0/P3 by analyzing the content of the packet. CL then forwards the analyzed packet to the queue P0/P3 corresponding to the estimated priority.

The processor PROC first retrieves and handles the packets of the highest priority queue P3. The packets are treated based on the current load of the processor. Once the queue P3 is empty, the processor PROC starts retrieving and handling the packets of the queue P2, and so further until the lowest priority queue P0. The packets are thus handled by the processor PROC in function of their priority rather than in function of the order of incoming from the termination link TL into the line card TLK.

In order to prevent overload of the queues, each queue P0-P3 is controlled by a queue manager (not shown) that discards packets arriving from the packet classifier CL when a predetermined threshold filling level T0-T3 of the queue is reached. This threshold filling level T0-T3 may be different for each of the queues P0-P3 respectively. It is thereby possible to obtain a telecommunication router of which the data traffic is dependent of the types of packets and their associated transmission priority rather than of the incoming traffic flow.

As already mentioned, the processor PROC threats the packets based on its load and on how many packets are still in the different queues. If a certain threshold T0/T3 of a queue P0/P3 is exceeded, the processor PROC can't handle new messages any longer and any new incoming packet will be discarded.

It is to be noted that the packet classifier CL is further provided with an additional output OUT towards which packets that are not intended to the processor PROC will be forwarded.

It is also to be noted that, in a variant of the present telecommunication router, the Remote Transfer Service card RTS may be provided with several processors, similar to the processor PROC. Each of the processors is then able to retrieve packets of data from the queues P0-P3. This allows increasing the efficiency and the handling speed of the system.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

## Claims

1. A telecommunication router (TLK, RTS) connected to a termination link (TL) and comprising a processor (PROC) adapted to handle packets of data received from said link, said telecommunication router further comprising a plurality of queues (P0-P3) adapted to store packets of data prior to be transferred to said processor (PROC), and a packet classifier (CL) adapted to receive packets of data from said termination link, to classify the received packets according to predetermined types, and to forward classified packets towards one queue out of said plurality, said one queue being selected according to the type of the forwarded packet,
**characterized in that** each of said predetermined types is associated to a predetermined priority,
**in that** said plurality of queues is a plurality of priority queues (P0-P3),
**in that** said packet classifier (CL) is adapted to estimate said predetermined priority by analyzing the content of a packet and to forward the analyzed packet to the priority queue corresponding to the estimated priority,
and **in that** said processor (PROC) is adapted to retrieve packets of data from the priority queues of said plurality (P0-P3) according to predetermined priority rules whereby said processor is adapted to retrieve packets of data from a priority queue associated to a relative high predetermined priority prior to retrieve packets of data from another priority queue associated to a relatively lower predetermined priority.

2. The telecommunication router according to claim 1, **characterized in that** each priority queue of said plurality of priority queues (P0-P3) is controlled by a queue manager adapted to discard packets coming from said packet classifier (CL) when a predetermined threshold filling level (T0-T3) of the priority queue is reached.

3. The telecommunication router according to claim 2, **characterized in that** each priority queue of said plurality of priority queues (P0-P3) may have a different predetermined threshold filling level (T0-T3).

4. The telecommunication router according to claim 1, **characterized in that** said processor (PROC) is adapted to retrieve packets of data from said priority queues according to the load of said processor.

5. The telecommunication router according to claim 1, **characterized in that** a plurality of termination links (TL) are connected to said packet classifier (CL).

6. The telecommunication router according to claim 1, **characterized in that** a plurality of processors (PROC) are adapted to retrieve packets of data from said priority queues.

7. The telecommunication router according to claim 1, **characterized in that** said packet classifier (CL) is adapted to forward to an output port (OUT) of said telecommunication router (TLK, RTS) packets that are not intended to said processor (PROC).

## Patentansprüche

1. Telekommunikationsrouter (TLK, RTS), welcher an einen Abschluss-Link (TL) gekoppelt ist und einen Prozessor (PROC) umfasst, welcher dazu ausgelegt ist, von dem besagten Link empfangene Datenpakete zu bearbeiten, wobei der besagte Telekommunikationsrouter weiterhin eine Mehrzahl von Warteschlangen (P0-P3) für das Speichern von Datenpaketen vor deren Übermittlung an den besagten Prozessor (PROC) sowie einen Paketklassifizierer (CL), welcher dazu ausgelegt ist, Datenpakete von dem besagten Abschluss-Link zu empfangen, die empfangenen Pakete nach vorbestimmten Typen zu klassifizieren und klassifizierte Pakete an eine der besagten Mehrzahl von Warteschlangen weiterzuleiten, umfasst, wobei die besagte eine Warteschlange gemäß dem Typ des weitergeleiteten Pakets ausgewählt wird,
**dadurch gekennzeichnet, dass** ein jeder der besagten vorbestimmten Typen mit einer vorbestimmten Priorität assoziiert ist,
dass die besagte Mehrzahl von Warteschlangen eine Mehrzahl von Prioritätswarteschlangen (P0-P3) ist,
dass der besagte Paketklassifizierer (CL) dazu ausgelegt ist, die besagte vorbestimmte Priorität durch Analysieren des Inhalts eines Paketes abzuschätzen und das analysierte Paket an die der abgeschätzten Priorität entsprechende Warteschlange weiterzuleiten, und dass der besagte Prozessor (PROC) dazu ausgelegt ist, Datenpakete gemäß vorbestimmten Prioritätsregeln aus den Prioritätswarteschlangen der besagten Mehrzahl von Warteschlangen (P0-P3) abzurufen, wobei der besagte Prozessor dazu ausgelegt ist, Datenpakete aus einer mit einer relativ hohen vorbestimmten Priorität assoziierten Prioritätswarteschlange abzurufen, bevor Datenpakete aus anderen, mit einer relativ niedrigeren Priorität assoziierten Prioritätswarteschlangen abgerufen werden.

2. Telekommunikationsrouter nach Anspruch 1, **dadurch gekennzeichnet, dass** eine jede Prioritätswarteschlange der besagten Mehrzahl von Prioritätswarteschlangen (P0-P3) über einen Warteschlangenverwalter gesteuert wird, welcher dazu ausgelegt ist, von dem besagten Paketklassifizierer (CL) kommende Pakete zu verwerfen, wenn ein vorbestimmter Grenzfüllstand (T0-T3) der Prioritätswarteschlange erreicht wird.

3. Telekommunikationsrouter nach Anspruch 2, **dadurch gekennzeichnet, dass** jede Prioritätswarteschlange der besagten Mehrzahl von Prioritätswarteschlangen (P0-P3) einen verschiedenen vorbestimmten Grenzfüllstand (TO-T3) haben kann.

4. Telekommunikationsrouter nach Anspruch 1, **dadurch gekennzeichnet, dass** der besagte Prozessor (PROC) dazu ausgelegt ist, Datenpakete gemäß der Auslastung des besagten Prozessors aus der besagten Prioritätswarteschlange abzurufen.

5. Telekommunikationsrouter nach Anspruch 1, **dadurch gekennzeichnet, dass** eine Mehrzahl von Abschluss-Links (TL) an den besagten Paketklassifizierer (CL) gekoppelt ist.

6. Telekommunikationsrouter nach Anspruch 1, **dadurch gekennzeichnet, dass** eine Mehrzahl von Prozessoren (PROC) dazu ausgelegt ist, Datenpakete aus den besagten Prioritätswarteschlangen abzurufen.

7. Telekommunikationsrouter nach Anspruch 1, **dadurch gekennzeichnet, dass** der besagte Paketklassifizierer (CL) dazu ausgelegt ist, Pakete, die nicht für den besagten Prozessor (PROC) bestimmt sind, an einen Ausgangsport (OUT) des besagten Telekommunikationsrouters (TLK, RTS) weiterzuleiten.

## Revendications

1. Routeur de télécommunication (TLK, RTS) connecté à une liaison de terminaison (TL) et comprenant un processeur (PROC) adapté pour gérer des paquets de données reçus de la part de ladite liaison, ledit routeur de télécommunication comprenant en outre une pluralité de files d'attente (P0-P3) adaptées pour stocker des paquets de données avant qu'ils soient transférés audit processeur (PROC) et un classificateur de paquets (CL) adapté pour recevoir des paquets de données de la part de ladite liaison de terminaison, pour classifier les paquets reçus conformément à des types prédéterminés, et pour transférer les paquets classés vers une file d'attente parmi ladite pluralité, ladite file d'attente étant sélectionnée en fonction du type de paquet transféré,
**caractérisé en ce que** chacun desdits types prédéterminés est associé à une priorité prédéterminée,
**en ce que** ladite pluralité de files d'attente est une pluralité de files d'attente à priorité (P0-P3),
**en ce que** ledit classificateur de paquets (CL) est adapté pour estimer ladite priorité prédéterminée en analysant le contenu d'un paquet et pour transférer le paquet analysé à la file d'attente à priorité correspondant à la priorité estimée,
et **en ce que** ledit processeur (PROC) est adapté pour récupérer les paquets de données auprès des files d'attente à priorité de ladite pluralité (P0-P3) conformément aux règles de priorité prédéterminées, ledit processeur étant adapté pour récupérer les paquets de données auprès d'une file d'attente à priorité associée à une priorité prédéterminée relativement élevée avant de récupérer les paquets de données auprès d'une autre file d'attente associée à une priorité prédéterminée relativement plus faible.

2. Routeur de télécommunication selon la revendication 1, **caractérisé en ce que** chaque file d'attente à priorité de ladite pluralité de files d'attente à priorité (P0-P3) est commandée par un gestionnaire de file d'attente adapté pour rejeter les paquets en provenance dudit classificateur de paquets (CL) lorsqu'un seuil de niveau de remplissage (T0-T3) prédéterminé de la file d'attente à priorité est atteint.

3. Routeur de télécommunication selon la revendication 2, **caractérisé en ce que** chaque file d'attente à priorité de ladite pluralité de files d'attente à priorité (P0-P3) peut présenter un seuil de niveau de remplissage (T0-T3) prédéterminé différent.

4. Routeur de télécommunication selon la revendication 1, **caractérisé en ce que** ledit processeur (PROC) est adapté pour récupérer les paquets de données auprès desdites files d'attente à priorité conformément à la charge dudit processeur.

5. Routeur de télécommunication selon la revendication 1, **caractérisé en ce qu'**une pluralité de liaisons de terminaison (TL) est connectée audit classificateur de paquets (CL).

6. Routeur de télécommunication selon la revendication 1, **caractérisé en ce qu'**une pluralité de processeurs (PROC) est adaptée pour récupérer les paquets de données auprès desdites files d'attente à priorité.

7. Routeur de télécommunication selon la revendication 1, **caractérisé en ce que** ledit classificateur de paquets (CL) est adapté pour transférer à un port de sortie (OUT) dudit routeur de télécommunication (TLK, RTS) les paquets qui ne sont pas destinés audit processeur (PROC).
